(19)

**Europäisches Patentamt**
**European Patent Office**
**Office européen des brevets**

(11) **EP 3 838 396 A1**

(12) **EUROPÄISCHE PATENTANMELDUNG**

(43) Veröffentlichungstag:
**23.06.2021 Patentblatt 2021/25**

(21) Anmeldenummer: **19216814.4**

(22) Anmeldetag: **17.12.2019**

(51) Int Cl.:
**B01J 19/20** *(2006.01)*  **B29B 7/84** *(2006.01)*
**B29C 48/29** *(2019.01)*  **B29C 48/76** *(2019.01)*
**B29C 48/92** *(2019.01)*  **B29C 67/24** *(2006.01)*
**C08G 18/08** *(2006.01)*  **C08G 18/10** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **REAKTIVEXTRUSION VON TPU UNTER ZUFÜHRUNG VON WASSER**

(57) Die vorliegende Erfindung betrifft ein Verfahren zur Herstellung eines thermoplastischen Polyurethans aus einem OH-funktionellen Prepolymer und einem Isocyanat mittels Reaktivextrusion.

Des Weiteren betrifft die Erfindung eine Vorrichtung zur Durchführung des erfindungsgemäßen Verfahrens. Ferner betrifft die Erfindung ein thermoplastisches Polyurethan erhältlich oder erhalten durch das erfindungsgemäße Verfahren sowie die Verwendung des thermoplastischen Polyurethans in einem Formgebungsverfahren unter Aufschmelzen des thermoplastischen Polyurethans, insbesondere zur Herstellung von Innenraumbauteilen von Fahrzeugen.

## Beschreibung

Die vorliegende Erfindung betrifft ein Verfahren zur Reaktivextrusion von thermoplastischem Polyurethan. Des Weiteren betrifft die Erfindung ein durch dieses Verfahren erhaltenes thermoplastisches Polyurethan und eine Vorrichtung zur Durchführung des Verfahrens.

Thermoplastische Polyurethane sind weitgehend unverzweigte Makromoleküle. Sie werden üblicherweise erhalten, indem bifunktionelle Isocyanate, langkettige Diole, wie z.B. Polyether oder Polyester, und Kettenverlängerer miteinander zur Reaktion gebracht werden. Es gibt verschiedene technische Verfahren zur Herstellung von thermoplastischem Polyurethan (TPU), wobei zwischen diskontinuierlichen Batch-Verfahren und kontinuierlichen Verfahren unterschieden wird. Ein kontinuierliches Verfahren ist die Reaktivextrusion, bei der die zur Herstellung dienenden Ausgangsstoffe in einen Extruder eingetragen werden. Bei der Reaktiv-Extrusion werden die Ausgangsstoffe durch die Drehbewegungen der Schnecke des Extruders vermischt und reagieren miteinander, sodass eine Polymerschmelze erhalten wird. Diese Polymerschmelze wird dann aus dem Extruder ausgepresst und die erhaltenen Extrudat-Stränge, evtl. nach einer Abkühlung in einem Wasserbad, zu Granulat geschnitten oder direkt in eine bestimmte Form gebracht. Die Reaktivextrusion ist von der Verwendung eines Extruders zur reinen Verarbeitung von Kunststoffen zu unterscheiden.

Für die Verarbeitung von TPU zu Formteilen, also Produkten mit einer bestimmten Geometrie, sind verschiedene Verfahren bekannt, wie z.B. Extrusion für Profile, Schläuche und Folien, Kalandrieren für das Aufbringen von Beschichtungen auf TPU auf ein Substrat und das Spritzgussverfahren sowohl für Präzisionsteile als auch für größere Teile im Anlagenbau und im Automobilbau. Beim Spritzgießen wird eine flüssige Polymerschmelze unter Druck in eine Form gespritzt. In der Form geht die Schmelze durch Abkühlung oder eine Vernetzungsreaktion wieder in einen festen Zustand über und wird aus der Form gelöst. Um Formteile mit komplexen Geometrien wie z.B. engen Spalten oder kleinen Öffnungen abbilden zu können, sollte die Polymerschmelze eine niedrige Viskosität aufweisen, damit die Schmelze die Form vollständig ausfüllt und im ausgehärteten Zustand diese Geometrien im Formteil abbildet. Außerdem können lange Fließwege in einer Form gefüllt werden, wenn die Polymerschmelze eine niedrige Viskosität aufweist.

Aus dem Stand der Technik sind Verfahren zur Reaktivextrusion von Polymeren bekannt.

Die CN 10 500 162 6 offenbart ein Verfahren für die Reaktiv-Extrusion von Polyurethan, bei dem die Fließeigenschaften des TPU durch Zugabe einer Mischung aus Diphenylsilylglykol und Ethylenglykol als Kettenverlängerer beeinflusst werden. Dabei muss das Verhältnis von Diphenylsilylglykol und Ethylenglykol jedoch richtig eingestellt werden, um die gewünschten Eigenschaften zu erhalten.

Die CN 10 714 1437 bezieht sich auf TPU, das in 3D-Druckverfahren verwendet werden soll. Die Druckschrift offenbart eine Synthese durch Reaktivextrusion und lehrt, dass die Schmelzenthalpie eines TPU durch die Zugabe eines Kettenverlängerers beeinflusst werden kann, wobei der Kettenverlängerer ein Cyclodextrin-Derivat ist.

Die DE 44 029 434 offenbart einen Thermoplasten, der durch Silanvernetzung von Polyethylen und Polyprophylen in einem Extruder erhalten wird. Bei der Herstellung werden verschiedene Zusatzstoffe hinzugegeben, unter anderem auch Wasser oder wasserhaltigen Zeolithe, so dass die silanvernetzte Polyethylenphase feindispers im thermoplastischen Polypropylenmaterial vorliegt.

Die EP 0708124 bezieht sich auf ein Verfahren zur Reaktivextrusion von TPU und lehrt, dass durch eine bestimmte Ausgestaltung der Geometrie der im Extruder befindlichen Schnecken eine homogene Polymerschmelze erhalten werden kann, die insbesondere weniger gelartige Knötchen enthält. Die Druckschrift enthält keinen Hinweis auf eine Verbesserung der Schmelzviskosität des erhaltenen TPU.

Es ist Aufgabe der vorliegenden Erfindung, ein Reaktivextrusionsverfahren für thermoplastisches Polyurethan zur Verfügung zu stellen, mit dem die Schmelzviskosität des erhaltenen Polyurethans erniedrigt werden kann. Insbesondere soll ein Reaktivextrusionsverfahren zur Verfügung gestellt werden, mit dem die Schmelzviskosität abhängig von den Anforderungen der Weiterverarbeitung im Spritzgussverfahren auf einen Wert eingestellt werden kann. Insbesondere soll ein Reaktivextrusionsverfahren zur Verfügung gestellt werden, mit dem die Schmelzviskosität des erhaltenen thermoplastischen Polyurethans so eingestellt werden kann, dass es bei der Verarbeitung im Spritzgussverfahren lange Fließwege zurücklegen kann und auch anspruchsvolle Geometrien, wie z.B. enge Spalten, ausfüllt.

Diese Aufgabe wurde gelöst durch ein Verfahren zur Herstellung eines thermoplastischen Polyurethans aus einem OH-funktionellen Prepolymer und einem Isocyanat mittels Reaktivextrusion umfassend die folgenden Schritte:

a) Einleiten des Prepolymerstroms enthaltend OH-funktionelle Prepolymere in einen Extruder,

b) Einleiten eines Isocyanatzuführungsstroms in den Extruder in Extruderarbeitsrichtung stromabwärts der Einleitung des Prepolymerstroms, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 120 zueinander stehen,

c) Umsetzen des Prepolymerstroms mit dem Isocyanatzuführungsstrom in dem Extruder unter Erhalt des thermoplastischen Polyurethans als Extrudat, wobei Gase und / oder gasförmige Nebenprodukte der Umsetzung aus dem Extruder durch Anlegen eines Unterdrucks von 50 mbar bis 800 mbar unter Normaldruck mittels eines an den Extruder angeordneten Entgasungsschacht entfernt werden,

und wobei stromabwärts der Einleitung des Isocyanatzuführungsstroms durch eine Wasserzuführungsleitung Wasser in den Extruder eingeleitet wird, wobei der Massenstrom des eingeleiteten Wassers zur Summe der Massenströme des Prepolymerstroms und des Isocyanatzuführungsstroms in einem Verhältnis von 1 : 30 bis 1 : 200 stehen, wobei das Verhältnis bevorzugt 1 : 40 bis 1: 125, weiter bevorzugt 1 : 40 bis 1 : 100 beträgt.

Bevorzugt wird das Wasser im in Extruderarbeitsrichtung letzten Drittel des Extruders in den Extruder eingeleitet, insbesondere wird das Wasser bevorzugt durch den Entgasungsschacht in den Extruder geleitet. Sofern das Wasser durch den Entgasungsschacht in den Extruder geleitet wird, kann dies bevorzugt geschehen, indem eine Zuführungsleitung für das Wasser in dem Entgasungsschacht angeordnet wird.

Bevorzugt wird die im Extruder befindliche Masse im Bereich der Einmündung der Wasserzuführungsleitung (33) in den Extruder (18) und/ oder stromabwärts von dieser durch Knetelemente geknetet. Bevorzugt weist der Extruder eine Dosierzone auf und das Wasser wird bevorzugt in diese Dosierzone eindosiert. Eine derartige Dosierzone umfasst bevorzugt mehrere Zonen, deren Abfolge in Extruderarbeitsrichtung im folgenden beschrieben wird: Zunächst umfasst die Dosierzone eine Zone, deren Förderwirkung entgegen der Fließrichtung des Massenstroms in Extruderarbeitsrichtung gerichtet ist, um einen Druck aufzubauen. Auf diese Zone folgt eine sog. Dispergierzone, die bevorzugt Knetscheiben bzw. synonym hierzu Knetelemente, umfasst. Knetscheiben sind bevorzugt, weil sie selbstreinigend sind und daher nicht die Möglichkeit bieten, dass sich Produkt in nicht durchströmten Bereichen ablagert. In die Dispergierzone wird das Wasser in gasförmigem oder flüssigem Zustand, bevorzugt in flüssigem Zustand, eindosiert. Die Dispergierzone wiederum ist bevorzugt von einer weiteren Zone gefolgt, deren Förderwirkung entgegen der Fließrichtung des Massenstroms gerichtet ist, um den Druck in der Dispergierzone gegenüber den folgenden Zonen auf einem erhöhten Niveau zu halten. Derartige Dispergierzonen sind dem Fachmann prinzipiell bekannt, um Restgehalte von z.B. Lösungsmitteln in Polymeren abzusenken und sind beispielsweise in Klemens Kohlgrüber, Co-Rotating Twin-Screw extruders, 2008, ISBN 978-3-446-41372-6, Seite 188, beschrieben. Knetscheiben sind ebenda auf Seite 102-104 beschrieben.

Der Prepolymerstrom wird bevorzugt durch die folgenden Schritte erzeugt:

- Mischen eines Polyisocyanatstroms und eines Polyolstroms in einer ersten Mischungseinrichtung, so dass ein Mischungsstrom erhalten wird, wobei die Massenströme des Polyisocyanatstroms und des Polyolstroms so eingestellt werden, dass der Isocyanat-Index im Mischungsstrom von 55 bis 85 beträgt,

- Einleiten des Mischungsstroms in einen Kreislaufstrom, der in einem Kreislauf geführt wird, wobei die Monomere des Polyisocyanatstroms und des Polyolstroms im Kreislaufstrom zu OH-funktionellen Prepolymeren reagieren,

- Abteilen eines Teilstroms vom Kreislaufstrom als Prepolymerstrom und Bereitstellung des Prepolymerstroms.

In dem Verfahren zur Bereitstellung des Prepolymerstroms enthält oder besteht der Polyisocyanatstrom aus aromatischen, aliphatischen oder araliphatischen Diisocyanaten oder einer Mischung von mindestens zwei hieraus. Bevorzugt werden lineare aromatische, aliphatische oder araliphatische Diisocyanate wie beispielsweise 4,4'-Methylendiphenyldiisocyanat (MDI), 1,4-Diisocyanatobutan (BDI), 1,5-Pentamethylendiisocyanat (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan oder 4,4'-Diisocyanatodicyclohexylmethan (H12MDI) oder einer Mischung von mindestens zwei hieraus, besonders bevorzugt sind lineare aliphatische Diisocyanate wie beispielsweise 1,4-Diisocyanatobutan (BDI), 1,5-Pentamethylendiisocyanat (PDI), 1,6-Hexamethylendiisocyanat (HDI) oder einer Mischung von mindestens zwei hieraus. Der Polyisocyanatstrom (A) enthält oder besteht bevorzugt aus 1,6-Hexamethylendiisocyanat.

Die Polyisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin, 1,5-Diisocyanatopentan aus 1,5-Pentamethylendiamin hergestellt und 1,4-Diisocyanatobutan (BDI) aus 1,4-Diaminobutan, wobei 1,6-Hexamethylendiamin, 1,5-Pentamethylendiamin und 1,4-Diaminobutan aus biologischen Quellen, vorzugsweise durch bakterielle Fermentation, gewonnen werden.

Der Polyolstrom enthält oder besteht aus C2 bis C10 aromatischen, aliphatischen oder araliphatischen Diolen oder Mischungen davon, wie zum Beispiel 1,4-Bis-(β-hydroxy-ethoxy-)benzol, 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol, 1,6-Hexandiol, 1,8- Octandiol, 1,10-Decandiol, 1,4-Cyclobutandiol, 1,6-Cyclohexandiol oder 1,4-Dimethylolcyclobutan. Bevorzugt enthält oder besteht der Polyolstrom aus aliphatischen oder araliphatischen Diolen, besonders bevorzugt aus linearen aliphatischen Diolen, insbesondere enthält oder besteht der Polyolstrom aus 1,4-Butandiol.

Bevorzugt weist der Polyisocyanatstrom eine Temperatur von 20 °C bis 25 °C und unabhängig hiervon der Polyolstrom eine Temperatur von 35 °C bis 45 °C auf. Die Massenströme des Polyisocyanatstroms und des Polyolstroms werden so eingestellt, dass der Isocyanat-Index im Mischungsstrom von 55 bis 85 beträgt.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25 °C.

In einer bevorzugten Ausführungsform kann der Polyolstrom mit dem Polyisocyanatstrom bereits stromaufwärts der ersten Mischungseinrichtung zusammengeführt werden. In einer anderen Ausführungsform werden der Polyolstrom und der Isocyanatstrom unabhängig voneinander in die erste Mischungseinrichtung geführt. Bei der ersten Mischungseinrichtung handelt es sich um einen dynamischen Mischer wie z.B. einen Rotor-Stator-Mischer oder einen Statikmischer, bevorzugt um einen Statikmischer.

Der Mischungsstrom wird im zweiten Schritt des Verfahrens zur Bereitstellung eines Prepolymerstroms in einen Kreislaufstrom eingeleitet, der in einem Kreislauf geführt wird, wobei die Monomere des Polyisocyanatstroms und des Polyolstroms im Kreislaufstrom zu OH-funktionellen Prepolymeren weiterreagieren. Im dritten Schritt des Verfahrens zur Bereitstellung eines Prepolymerstroms wird ein Teilstrom vom Kreislaufstrom als Prepolymerstrom abgeteilt und für das Reaktivextrusionsverfahren bereitgestellt.

Dem Kreislaufstrom werden also Monomere des Polyisocyanatstroms und des Polyolstroms zugeführt und aus dem Kreislaufstrom OH-funktionelles Prepolymer entnommen. Der Kreislaufstrom enthält also eine Mischung aus Monomeren des Polyisocyanatstroms und des Polyolstroms sowie aus oligomeren Reaktionsprodukten und aus dem Prepolymer. Während des Durchlaufens des Kreislaufstroms reagieren die Monomere sowohl miteinander als auch mit im Kreislaufstrom bereits vorhandenen oligomeren Reaktionsprodukten dieser Monomere. Im Kreislaufstrom findet folglich eine kontinuierliche Reaktion unter Erhalt des OH-funktionellen Prepolymers statt. Dabei können einige Prepolymere den Kreislaufstrom bevorzugt mehrfach durchlaufen, bevor sie als Teilstrom abgeteilt werden.

Der Kreislaufstrom durchläuft bevorzugt mindestens zwei Mischungseinrichtungen, wobei es sich insbesondere um mindestens eine temperierbare Mischungseinrichtung handelt. Bevorzugt weist der Kreislaufstrom eine Temperatur von 160 °C bis 220 °C, bevorzugter von 170 °C bis 190 °C auf.

Der bereitgestellte Prepolymerstrom wird in Schritt a) des erfindungsgemäßen Verfahrens bevorzugt einlassseitig des Extruders in den Extruder eingeleitet. Bevorzugt werden vor dem Einleiten des Prepolymerstroms in den Extruder aus dem Prepolymerstrom Gase und gasförmige Nebenprodukte entfernt. In einer Ausführungsform werden Gase und gasförmige Nebenprodukte entfernt, indem der Prepolymerstrom durch eine Entlüftungseinrichtung mit einem Unterdruck von 0,1 mbar bis 10 mbar unter Normaldruck geführt wird, wobei die Entlüftungseinrichtung vorzugsweise an dem Extruder angeordnet ist. Bevorzugt erfolgt die Entfernung von Gasen und gasförmigen Nebenprodukten durch eine atmosphärische Entgasung, d.h. durch eine Entlüftungseinrichtung, die an dem Extruder angeordnet ist, ohne Anlegung eines Unterdrucks.

In Schritt b) des erfindungsgemäßen Verfahrens wird ein Isocyanatzuführungsstrom in den Extruder in Extruderarbeitsrichtung stromabwärts der Einleitung des Prepolymerstroms eingeleitet, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 120 zueinander stehen. Bevorzugt enthält oder besteht der Isocyanatzuführungsstrom aus aromatischen, aliphatischen oder araliphatischen Diisocyanaten oder einer Mischung von mindestens zwei hieraus, insbesondere aus 4,4'-Methylendiphenyldiisocyanat (MDI), 1,4-Diisocyanatobutan (BDI), 1,5-Pentamethylendiisocyanat (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan oder 4,4'-Diisocyanatodicyclohexylmethan (H12MDI), insbesondere enthält oder besteht der Isocyanatzuführungsstrom aus 1,6-Hexamethylendiisocyanat. In einer weiteren Ausführungsform enthalten oder bestehen der Polyisocyanatstrom und der Isocyanatzuführungsstrom aus 4,4'-Methylendiphenyldiisocyanat (MDI), 1,4-Diisocyanatobutan (BDI), 1,5-Pentamethylendiisocyanat (PDI), 1,6-Hexamethylendiisocyanat (HDI), oder Mischungen davon, insbesondere weisen der Polyisocyanatstrom und der Isocyanatzuführungsstrom dieselbe Zusammensetzung auf. Bevorzugt enthalten oder bestehen der Polyisocyanatstrom und der Isocyanatzuführungsstrom aus 1,6-Hexamethylendiisocyanat und der Polyolstrom enthält oder besteht aus 1,4-Butandiol.

In Schritt c) wird der Prepolymerstrom mit dem Isocyanatzuführungsstrom in dem Extruder umgesetzt unter Erhalt des thermoplastischen Polyurethans als Extrudat. In dem Extruder werden die beiden Komponenten durch die Bewegungen der Förderelemente im Inneren des Extruders sowohl durchmischt als auch in Extruderarbeitsrichtung stromabwärts in Richtung einer Auslassöffnung des Extruders befördert. Dabei reagieren die Komponenten miteinander in einem kontinuierlichen Prozess, so dass das thermoplastische Polyurethan erhalten wird. Bevorzugt nimmt die Viskosität der im Extruder befindlichen Komponenten in Extruderarbeitsrichtung mit fortschreitendem Polymerisationsgrad zu. Im Bereich der Einlassöffnungen für den Prepolymerstrom und den Isocyanatzuführungsstrom liegt im Extruder bevorzugt eine Mischung mit einer niedrigen Viskosität vor, die als Flüssigkeit bezeichnet werden kann, während kurz vor Austritt aus dem Extruder vorzugsweise eine Polymerschmelze vorliegt, welche eine höhere Viskosität aufweist, als der Prepolymerstrom und der Isocyanatzuführungsstrom und als zähflüssig bezeichnet werden kann. Bei dem Extruder handelt es sich bevorzugt um einen gegenläufigen Doppelschneckenextruder. Bevorzugt wird die Umsetzung in Schritt c) bei einer Temperatur von 150 °C bis 260 °C, bevorzugter von 180 °C bis 250 °C durchgeführt.

Des Weiteren werden in Schritt c) des erfindungsgemäßen Verfahrens aus dem thermoplastischen Polyurethan Gase und / oder gasförmige Nebenprodukte der Umsetzung aus dem Extruder entfernt, indem ein Unterdruck von 50 mbar bis 800 mbar, bevorzugter von 80 mbar bis 600 mbar, noch bevorzugter von 100 mbar bis 500 mbar, jeweils unter Normaldruck, an einem an dem Extruder angeordneten Entgasungsschacht angelegt wird, wobei der der Entgasungsschacht (19) bevorzugt stromabwärts der Einleitung des Isocyanatzuführungsstroms (F) und im in Extruderarbeitsrichtung letzten Drittel des Extruders (18) angeordnet ist, wobei der Entgasungsschacht (19) bevorzugt im letzten Viertel, bevorzugt im letzten Fünftel des Extruders, jeweils in Extruderarbeitsrichtung, angeordnet ist.

Schritt c) wird bevorzugt durchgeführt, indem ein Vakuumdom auf dem Entgasungsschacht angeordnet ist und ein Unterdruck von 100 mbar bis 300 mbar unter Normaldruck angelegt wird.

In einer anderen bevorzugten Ausführungsform des erfindungsgemäßen Verfahrens wird Schritt c) durchgeführt, indem in dem Entgasungsschacht ein Entgasungsextruder angeordnet ist, auf dem sich ein Vakuumdom befindet. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördern.

In einer weiteren bevorzugten Ausführungsform wird Schritt c) durchgeführt indem in dem Entgasungsschacht des Extruders eine Rückhalteeinrichtung angeordnet und auf dem Entgasungsschacht ein Vakuumdom positioniert wird. Bei dieser Ausführungsform wird ein Doppelschneckenextruder zur Durchführung des Verfahrens verwendet und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken im Extruder wieder in den Extruder gezogen. Als Zwickel wird dabei der Eingreifbereich der beiden Schnecken bezeichnet. In Doppelschneckenextrudern berühren sich die beiden Schneckenelemente nicht, sind aber so ausgestaltet, dass sie ineinandergreifen. Als aufdrehende Schnecke wird die Schnecke bezeichnet, deren Rotationsbewegung von dem Gehäuse des Extruders weg zu dem Bereich zwischen den beiden Achsen der Schneckenelemente gerichtet ist.

Unter Normaldruck wird im Sinne der Erfindung ein Druck von 101 325 Pa = 1,01325 bar verstanden.

Bevorzugt umfasst das Verfahren die folgenden Schritte:

d) Abkühlen des dem thermoplastischen Polyurethans unter seinen Schmelzpunkt in einer Kühlungseinrichtung, wobei es sich bei der Kühlungseinrichtung bevorzugt um ein Wasserbad handelt, sowie optional

e) Zerkleinerung des thermoplastischen Polyurethans in einer Zerkleinerungseinrichtung.

Dabei wird durch das Abkühlen aus dem thermoplastischen Polyurethan ein Feststoff erhalten, der in der Zerkleinerungseinrichtung bevorzugt zu einem Granulat zerkleinert wird. Dieses Granulat kann in einem Extrusionsverfahren zur Weiterverarbeitung aufgeschmolzen und die durch das Aufschmelzen erhaltene Polymerschmelze zu einem Formteil verarbeitet werden, zum Beispiel durch Einspritzen in eine Form.

Eine weitere Ausführungsform die Erfindung betrifft ein thermoplastisches Polyurethan erhältlich oder erhalten durch das erfindungsgemäße Verfahren, welches bevorzugt eine Schmelzeviskosität gemessen als komplexe Viskosität nach ISO 6721-10:1999 bei 200 °C und 1 Hz von 100 Pa*s bis 500 Pa*s, bevorzugt von 110 Pa*s bis 400 Pa*s, aufweist.

In einer weiteren bevorzugten Ausführungsform betrifft die Erfindung ein thermoplastisches Polyurethan, das eine Schmelzeviskosität gemessen als komplexe Viskosität nach ISO 6721-10:1999 bei 200 °C und 1 Hz von 100 Pa*s bis 500 Pa*s, bevorzugt von 110 Pa*s bis 400 Pa*s, aufweist.

Eine weitere Ausführungsform der Erfindung betrifft die Verwendung eines thermoplastischen Polyurethans zur Herstellung eines Formteils im Spritzgussverfahren, insbesondere zur Herstellung von Innenraumbauteilen von Fahrzeugen, Formkörpern, Fasern oder Folien.

Eine weitere Ausführungsform der Erfindung betrifft eine Vorrichtung zur Durchführung des erfindungsgemäßen Verfahrens umfassend:

eine Prepolymerzuführungsleitung zur Förderung eines Prepolymerstroms welche einlassseitig in einen Extruder mündet und wobei der Extruder bevorzugt ein gleichläufiger Doppelschneckenextruder ist;

ein in der Prepolymerzuführungsleitung vorgesehenes Druckregelventil zur Regulierung des Drucks des Prepolymerstroms;

ein in der Prepolymerzuführungsleitung angeordnetes und insbesondere stromabwärts des Druckregelventils positioniertes Dreiwegeventil, von dem eine in einen Abfallbehälter mündende Abfallleitung abgeht, über die der Prepolymerstrom insbesondere bei Inbetriebnahme, Außerbetriebnahme oder Störung der Vorrichtung ganz oder teilweise in den Abfallbehälter geführt werden kann;

eine vorzugsweise an der Einmündung der Prepolymerzuführungsleitung in den Extruder angeordnete Entlüftungseinrichtung zur Entfernung von Gasen und gasförmigen Nebenprodukten aus dem Prepolymerstrom;

eine Isocyanatzuführungsleitung zur Förderung eines Isocyanatzuführungsstroms, die in Extruderarbeitsrichtung vorzugsweise stromabwärts der Prepolymerzuführungsleitung in den Extruder mündet;

optional eine der Isocyanatzuführungsleitung zugeordnete dritte Fördereinrichtung zur Förderung des Isocyanatzuführungsstroms;

optional einen an der Isocyanatzuführungsleitung angeschlossenen dritten Massendurchflussmesser; wobei der Extruder zur Umsetzung der Komponenten des Prepolymerstroms mit den Komponenten des Isocyanatzuführungsstroms zu einem thermoplastischen Polyurethan geeignet und diesem ein Entgasungsschacht zur Entfernung von Gasen und gasförmigen Nebenprodukten mittels Unterdruck von 50 mbar bis 800 mbar unter Normaldruck aus dieser Umsetzung zugeordnet ist, wobei der Entgasungsschacht bevorzugt stromabwärts der Einleitung des Isocyanatzuführungsstroms und im in Extruderarbeitsrichtung letzten Drittel des Extruders angeordnet ist, wobei der Entgasungsschacht weiter bevorzugt im letzten Viertel, insbesondere im letzten Fünftel des Extruders, angeordnet ist; und wobei eine Wasserzuführungsleitung zur Förderung von Wasser stromabwärts der Einleitung des Isocyanatzuführungsstroms und im in Extruderarbeitsrichtung letzten Drittel des Extruders in den Extruder mündet, bevorzugt mündet die Wasserzuführungsleitung im Entgasungsschacht, optional eine hinter dem Auslass des Extruders angeordnete Kühlungseinrichtung, vorzugsweise ein Wasserbad, zur Abkühlung des thermoplastischen Polyurethans unter seinen Erstarrungspunkt; optional eine sich an die Kühlungseinrichtung anschließende Zerkleinerungseinrichtung zur Zerkleinerung des abgekühlten thermoplastischen Polyurethans.

Bevorzugt umfasst die Vorrichtung zur Durchführung des erfindungsgemäßen Verfahrens eine Steuerungseinrichtung, die mit der Wasserzuführungsleitung gekoppelt ist, wobei die Steuerungseinrichtung geeignet ist, den Massenstrom des eingeleiteten Wassers zur Summe der Massenströme des Prepolymerstroms und des Isocyanatzuführungsstroms in einem Verhältnis von 1 : 30 bis 1 : 200 einzustellen. In einer bevorzugten Ausführung wird das Wasser mit einer Pumpe gepumpt. Die Steuerungseinrichtung besteht beispielsweise aus einer Messeinheit, beispielsweise einem Massendurchflussmesser nach dem Coriolis-Prinzip oder einer Blende, und einem Kontrollorgan beispielsweise einem Ventil oder einer Möglichkeit, den Volumenstrom der Pumpe zu verstellen, beispielsweise durch Änderung der Drehzahl der Pumpe oder des Kolbenhubs bei einer entsprechenden Kolbenpumpe.

Des Weiteren befindet sich bevorzugt im Bereich der Einmündung der Wasserzuführungsleitung (33) in den Extruder (18) und/ oder stromabwärts von dieser eine Dispergierzone mit Knetelementen nach Klemens Kohlgrüber, Co-Rotating Twin-Screw Extruders, 2008, ISBN 978-3-446-41372-6, Seite 102-104. Des Weiteren sind bevorzugt im Bereich der Einmündung der Wasserzuführungsleitung (33) in den Extruder (18) und/ oder stromabwärts von dieser zumindest in einer Zone des Extruders die Schneckenwellen mit Knetelementen besetzt. Dabei handelt es sich bevorzugt um Knetelemente wie sie in Klemens Kohlgrüber, Co-Rotating Twin-Screw Extruders, 2008, ISBN 978-3-446-41372-6, Seiten 102-104 beschrieben sind.

Bevorzugt umfasst die Vorrichtung zur Durchführung des erfindungsgemäßen Verfahrens die folgenden, weiteren Komponenten:

einen Isocyanat-Vorratsbehälter, von dem eine Isocyanatleitung zur Förderung eines Polyisocyanatstroms abgeht, die in eine erste Mischungseinrichtung mündet;

optional eine der Isocyanatleitung zugeordnete erste Fördereinrichtung zur Förderung des Polyisocyanatstroms;

optional einen an der Isocyanatleitung angeschlossenen ersten Massendurchflussmesser;

einen Polyol-Vorratsbehälter, von dem eine Polyolleitung zur Förderung eines Polyolstroms abgeht, die in die erste Mischungseinrichtung mündet, wobei die Polyolleitung insbesondere stromaufwärts der ersten Mischungseinrichtung mit der Isocyanatleitung zusammengeführt wird;

optional eine der Polyolleitung zugeordnete zweite Fördereinrichtung zur Förderung des Polyolstroms;

optional einen an der Polyolleitung angeschlossenen zweiten Massendurchflussmesser;

eine Kreislaufzuführungsleitung zur Förderung eines aus der ersten Mischungseinrichtung austretenden Mischungsstroms, die in eine Kreislaufleitung zur Förderung des Kreislaufstroms und chemischen Umsetzung der Komponenten des Kreislaufstroms mit den Komponenten des Mischungsstroms mündet;

wobei die Kreislaufleitung vorzugsweise in Strömungsrichtung eine zweite Mischungseinrichtung, eine temperierbare Mischungseinrichtung sowie eine temperierbare Fördereinrichtung umfasst;

und wobei die Prepolymerzuführungsleitung von der Kreislaufleitung abgeht,

und wobei die Isocyanatzuführungsleitung vom Isocyanat-Vorratsbehälter oder der Isocyanatleitung abgeht.

In einer bevorzugten Ausführungsform der Vorrichtung, mündet die Polyolleitung in die erste Mischungseinrichtung, d.h. sie mündet nicht stromaufwärts der ersten Mischungseinrichtung in die Isocyanatleitung.

Bevorzugt wird als erste Fördereinrichtung und / oder als zweite Fördereinrichtung unabhängig voneinander eine Zahnringpumpe und / oder als temperierbare Fördereinrichtung eine Zahnradpumpe eingesetzt.

Bevorzugt wird als erste und / oder zweite Mischungseinrichtung und/oder als temperierbare Mischungseinrichtung unabhängig voneinander ein Statikmischer eingesetzt.

Bevorzugt besteht die Kreislaufleitung aus doppelwandigen, mit einem Heizmittel beheizbaren Leitungen, wobei bevorzugt auch die zweite Mischungseinrichtung, die temperierbare Mischungseinrichtung sowie die temperierbare Fördereinrichtung mit einem Heizmittel beheizbar sind. Dabei ist das Heizmittel bevorzugt für eine Heiz-Temperatur von 160 °C bis 220 °C, bevorzugter von 170 °C bis 190 °C, geeignet.

In einer bevorzugten Ausführungsform umfasst die Vorrichtung einen Vakuumdom, der auf dem Entgasungsschacht angeordnet ist und der Vakuumdom zum Anlegen eines Unterdrucks von 50 mbar bis 800 mbar, bevorzugter von 80 mbar bis 600 mbar, besonders bevorzugt von 100 mbar bis 500 mbar jeweils unter Normaldruck, geeignet ist.

In einer anderen bevorzugten Ausführungsform umfasst die Vorrichtung einen Entgasungsextruder, der in dem Entgasungschacht angeordnet ist und auf dem Entgasungsschacht ein Vakuumdom geeignet zur Anlegung eines Unterdrucks von 50 mbar bis 800 mbar unter Normaldruck positioniert ist. Bei dem Entgasungsextruder handelt es sich bevorzugt um einen Schneckenextruder, bei dem die Laufrichtung der Schnecken so eingestellt ist, dass sie Polymerschmelze oder thermoplastisches Polyurethan, welches durch den Unterdruck aus dem Extruder in den Entgasungsschacht gezogen wird, wieder in den Extruder befördert.

In einer weiteren Ausführungsform umfasst die Vorrichtung eine Rückhalteeinrichtung, die in dem Entgasungsschacht des Extruders angeordnet ist und auf dem Entgasungsschacht ein Vakuumdom positioniert ist, wobei der Vakuumdom geeignet ist für das Anlegen eines Unterdrucks von 50 mbar bis 800 mbar, bevorzugt von 80 mbar bis 600 mbar, besonders bevorzugt von 100 mbar bis 500 mbar jeweils unter Normaldruck. Bei dieser Ausführungsform ist der Extruder ein Doppelschneckenextruder und die Öffnung des Entgasungsschachtes zum Extruder weist eine längliche Form auf und ist senkrecht zur Achse der Doppelschnecken ausgebildet, so dass durch die Öffnung ein Teil beider Doppelschnecken überdeckt wird. Die Rückhalteeinrichtung ist bevorzugt so ausgestaltet, dass ihre zum Extruder orientierte Öffnung den Bereich der aufdrehenden Schnecke und des Zwickels überdeckt, so dass in diesem Bereich keine Polymerschmelze oder thermoplastisches Polyurethan, welches durch den Unterdruck aus dem Extruder in den Entgasungsschacht gezogen wird, eindringen kann. Über dem nicht überdeckten Bereich der Öffnung der Rückhalteeinrichtung führt bevorzugt ein Schacht schräg gegen die Drehrichtung der nicht überdeckten Schnecke weg in Richtung des Vakuumdoms. So prallt Polymerschmelze oder thermoplastisches Polyurethan, welches in die Rückhalteeinrichtung gezogen wird, an dem schrägen Schacht ab und fällt wieder zurück in den Extruder und wird durch die Drehbewegung der Schnecken im Extruder wieder in den Extruder gezogen.

Bevorzugt ist der Extruder ein Planetwalzenextruder oder ein Schneckenextruder, wobei der Extruder bevorzugter ein gleichläufiger Doppelschneckenextruder ist.

Die vorliegende Erfindung wird im Folgenden anhand der Figuren 1, 2 und 3 näher erörtert. Darin zeigt

Fig. 1          eine Vorrichtung zur Durchführung eines Referenzverfahrens

Fign. 2 und 3     Vorrichtungen zur Durchführung des erfindungsgemäßen Verfahrens

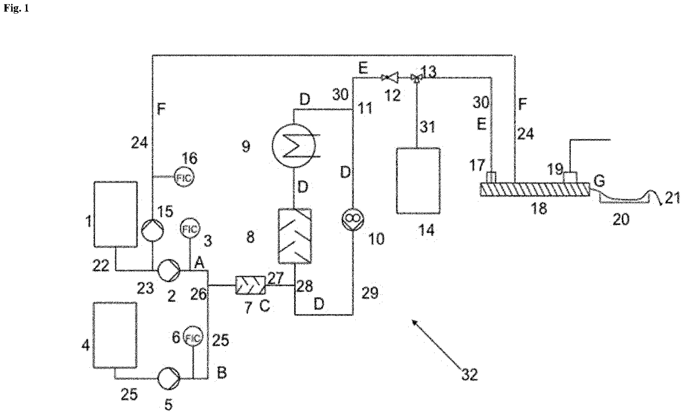

In Fig. 1 ist eine Vorrichtung 32 zur Herstellung von thermoplastischem Polyurethan nach einem Referenzverfahren abgebildet. Die Vorrichtung umfasst einen Isocyanat-Vorratsbehälter 1, von dem eine Isocyanatleitung 22 zur Förderung eines Polyisocyanatstroms A abgeht, die in einer ersten Mischungseinrichtung 7 mündet.

An der Isocyanatleitung 22 ist eine erste Einmündung 23 angeordnet, an der von Polyisocyanatstrom A ein Isocyanatzuführungsstrom F als Teilstrom abgeteilt wird und in einer Isocyanatzuführungsleitung 24 geführt wird. Die Isocyanatzuführungsleitung 24 setzt an der ersten Einmündung 23 an und mündet in einen Extruder 18. Der Isocyanatzuführungsleitung 24 ist eine dritte Fördereinrichtung 15 zur Förderung von Isocyanatzuführungsstrom F angeordnet und an der Isocyanatzuführungsleitung ist ein dritter Massendurchflussmesser 16 angeschlossen.

Der Isocyanatleitung 22 ist stromabwärts der ersten Einmündung 23 eine erste Fördereinrichtung 2 zur Förderung von Polyisocyanatstrom A angeordnet. An die Isocyanatleitung 22 ist ein erster Massendurchflussmesser 3 angeschlossen. Zwischen der ersten Fördereinrichtung 2 und der ersten Mischungseinrichtung 7 ist eine zweite Einmündung 26 in der Isocyanatleitung 22 angeordnet.

Des Weiteren umfasst die Vorrichtung 32 einen Polyol-Vorratsbehälter 4, von dem eine Polyolleitung 25 zur Förderung eines Polyolstroms B abgeht und in die zweite Einmündung 26 mündet. An der Polyolleitung 25 ist eine zweite Fördereinrichtung 5 angeordnet und ein zweiter Massendurchflussmesser 6 angeschlossen.

Stromabwärts der zweiten Einmündung 26 mündet die Isocyanatleitung 22 in die erste Mischungseinrichtung 7. Von der ersten Mischungseinrichtung 7 geht eine Kreislaufzuführungsleitung 27 ab, die in der dritten Einmündung 28 mündet. In der Kreislaufzuführungsleitung 27 wird ein Mischungsstrom C gefördert, der aus der ersten Mischungseinrichtung 7 austritt und an der dritten Einmündung 28 einen Kreislaufstrom D geleitet wird. Der Kreislaufstrom D wird in einer Kreislaufleitung 29 in einem Kreislauf geführt, wobei gleichzeitig die Komponenten des Kreislaufstroms D mit den Komponenten des Mischungsstroms C chemisch umgesetzt werden. Die Kreislaufleitung 29 umfasst in Strömungsrichtung eine zweite Mischungseinrichtung 8, eine temperierbare Mischungseinrichtung 9 sowie eine temperierbare Fördereinrichtung 10. Von dem Kreislaufstrom D wird an einer vierten Einmündung 11 ein Prepolymerstrom E als Teilstrom abgeteilt. Die vierte Einmündung 11 ist zwischen der temperierbaren Mischungseinrichtung 9 und der temperierbaren Fördereinrichtung 10 vorgesehen. Von der vierten Einmündung 11 geht eine Prepolymerzuführungsleitung 30 zur Förderung von Prepolymerstrom E ab, die einlassseitig im Extruder 18 mündet. In der Prepolymerzuführungsleitung 30 ist ein Druckregelventil 12 zur Regulierung des Drucks von Prepolymerstrom E vorgesehen. Stromabwärts des Druckregelventils 12 ist in der Prepolymerzuführungsleitung 30 ein Dreiwegeventil 13 positioniert, von dem eine Abfallleitung 31 abgeht, die in einen Abfallbehälter 14 mündet.

Über die Abfallleitung 31 kann der Prepolymerstrom E bei Inbetriebnahme, Außerbetriebnahme oder Störung der Vorrichtung 32 ganz oder teilweise in den Abfallbehälter 14 geführt werden. Des Weiteren umfasst die Vorrichtung eine an der Einmündung der Prepolymerzuführungsleitung 30 in den Extruder 18 angeordnete Entlüftungseinrichtung 17 zur Entfernung von Gasen und gasförmigen Nebenprodukten aus dem Prepolymerstrom E. In Extruderarbeitsrichtung stromabwärts der Prepolymerzuführungsleitung 30 wird über die Isocyanatzuführungsleitung 24 der Isocyanatzuführungsstrom F in den Extruder 18 geleitet.

Der Extruder 18 ist zur Umsetzung der Komponenten des Prepolymerstroms E mit den Komponenten des Isocyanatzuführungsstroms F zu einem thermoplastischen Polyurethan G geeignet. Dem Extruder 18 ist ein Entgasungsschacht 19 zur Entfernung von Gasen und gasförmigen Nebenprodukten mittels Unterdruck von 50 mbar bis 800 mbar unter Normaldruck aus dieser Umsetzung zugeordnet, der stromabwärts der Einleitung des Isocyanatzuführungsstroms F und im in Extruderarbeitsrichtung letzten Drittel des Extruders 18 angeordnet ist. Hinter dem Auslass des Extruders 18 ist eine Kühlungseinrichtung 20 angeordnet zur Abkühlung des thermoplastischen Polyurethans G unter seinen Schmelzpunkt. An die Kühlungseinrichtung 20 schließt sich eine Zerkleinerungseinrichtung 21 zur Zerkleinerung des abgekühlten thermoplastischen Polyurethans G an.

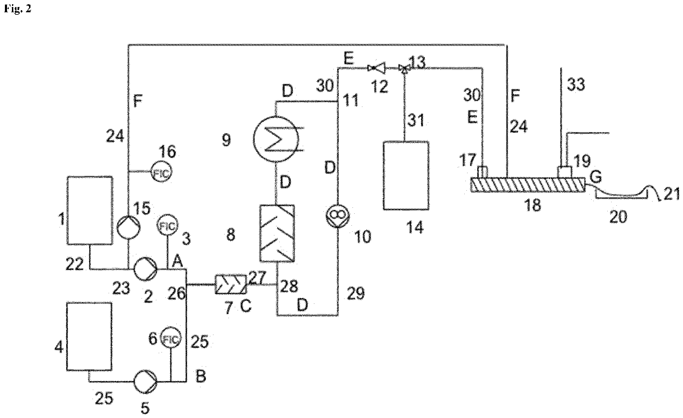

Fig. 2 zeigt eine Vorrichtung zur Durchführung des erfindungsgemäßen Verfahrens, wobei die Vorrichtung im Wesentlichen derjenigen aus Fig. 1 entspricht, jedoch im Unterschied zu der Vorrichtung aus Fig. 1 zusätzlich noch eine Wasserzuführungsleitung 33 umfasst, die zur Förderung von Wasser geeignet ist. Die Wasserzuführungsleitung 33 mündet in den Entgasungsschacht 19. Bei dieser Ausführungsform wird der Entgasungsschacht sowohl zur Entfernung von Gasen und / oder gasförmigen Nebenprodukte der Umsetzung aus dem Extruder genutzt als auch zur Einleitung von Wasser durch die Öffnung des Entgasungsschachts zum Extruder.

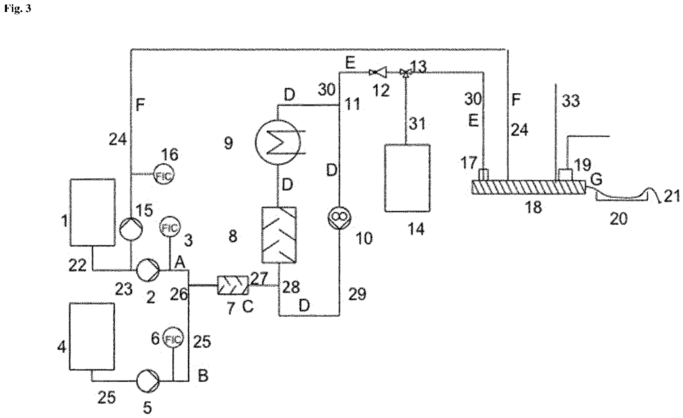

Fig. 3 zeigt eine weitere Vorrichtung zur Durchführung des erfindungsgemäßen Verfahrens, wobei die Vorrichtung im Wesentlichen derjenigen aus Fig. 1 entspricht, jedoch im Unterschied zu der Vorrichtung aus Fig. 1 zusätzlich noch eine Wasserzuführungsleitung 33 umfasst, die zur Förderung von Wasser geeignet ist. Die Wasserzuführungsleitung 33 mündet stromabwärts der Einleitung des Isocyanatzuführungsstroms F und im in Extruderarbeitsrichtung letzten Drittel des Extruders 18 in den Extruder 18.

In einer ersten Ausführungsform betrifft die Erfindung ein Verfahren zur Herstellung eines thermoplastischen Polyurethans aus einem OH-funktionellen Prepolymer und einem Isocyanat mittels Reaktivextrusion umfassend die folgenden Schritte:

a) Einleiten eines Prepolymerstroms enthaltend OH-funktionelle Prepolymere in einen Extruder,

b) Einleiten eines Isocyanatzuführungsstroms in den Extruder in Extruderarbeitsrichtung stromabwärts der Einleitung des Prepolymerstroms, wobei die Einleitung in der Weise erfolgt, dass die im Prepolymerstrom enthaltenen OH-funktionellen Prepolymere und das im Isocyanatzuführungsstrom enthaltene Polyisocyanat in einem Isocyanat-Index von 85 bis 120 zueinander stehen,

c) Umsetzen des Prepolymerstroms mit dem Isocyanatzuführungsstrom in dem Extruder unter Erhalt des thermoplastischen Polyurethans als Extrudat, wobei Gase und / oder gasförmige Nebenprodukte der Umsetzung aus dem Extruder durch Anlegen eines Unterdrucks von 50 mbar bis 800 mbar unter Normaldruck mittels eines an dem Extruder angeordneten Entgasungsschachtes entfernt werden, und wobei stromabwärts der Einleitung des Isocyanatzuführungsstroms durch eine Wasserzuführungsleitung Wasser in den Extruder eingeleitet wird, wobei der Massenstrom des eingeleiteten Wassers zur Summe der Massenströme des Prepolymerstroms und des Isocyanatzuführungsstroms in einem Verhältnis von 1 : 30 bis 1 : 200 stehen.

In einer zweiten Ausführungsform betrifft die Erfindung ein Verfahren nach Ausführungsform 1, wobei der Massenstrom des eingeleiteten Wassers zur Summe der Massenströme des Prepolymerstroms und des Isocyanatzuführungsstroms in einem Verhältnis von 1 : 40 bis 1 : 125 stehen, wobei die Massenströme bevorzugt in einem Verhältnis von 1 : 40 bis 1 : 100 stehen.

In einer dritten Ausführungsform betrifft die Erfindung ein Verfahren nach Ausführungsform 1 oder 2, wobei das Wasser im in Extruderarbeitsrichtung letzten Drittel des Extruders in den Extruder eingeleitet wird, wobei das Wasser bevorzugt durch den Entgasungsschacht in den Extruder geleitet wird.

In einer vierten Ausführungsform betrifft die Erfindung ein Verfahren nach einer der vorstehenden Ausführungsformen, wobei die im Extruder befindliche Masse im Bereich der Einmündung der Wasserzuführungsleitung in den Extruder und/ oder stromabwärts von dieser durch Knetelemente geknetet wird.

In einer fünften Ausführungsform betrifft die Erfindung ein Verfahren nach einer der vorstehenden Ausführungsformen, wobei der Prepolymerstrom durch die folgenden Schritte erzeugt wird:

-    Mischen eines Polyisocyanatstroms und eines Polyolstroms in einer ersten Mischungseinrichtung, so dass ein Mischungsstrom erhalten wird, wobei die Massenströme des Polyisocyanatstroms und des Polyolstroms so eingestellt werden, dass der Isocyanat-Index im Mischungsstrom von 55 bis 85 bis beträgt,

-    Einleiten des Mischungsstroms in einen Kreislaufstrom, der in einem Kreislauf geführt wird, wobei die Monomere des Polyisocyanatstroms und des Polyolstroms im Kreislaufstrom zu OH-funktionellen Prepolymeren reagieren,

-    Abteilen eines Teilstroms vom Kreislaufstrom als Prepolymerstrom und Bereitstellung des Prepolymerstroms.

In einer sechsten Ausführungsform betrifft die Erfindung ein Verfahren nach Ausführungsform 5, dadurch gekennzeichnet, dass der Polyolstrom C2 bis C10 aromatische, aliphatische oder araliphatische Diole oder Mischungen davon enthält oder daraus besteht, wie zum Beispiel 1,4-Bis-($\beta$-hydroxyethoxy-)benzol, 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol, 1,6-Hexandiol, 1,8- Octandiol, 1,10-Decandiol, 1,4-Cyclobutandiol, 1,6-Cyclohexandiol oder 1,4-Dimethylolcyclobutan. Bevorzugt enthält oder besteht der Polyolstrom aus aliphatischen oder araliphatischen Diolen, besonders bevorzugt aus linearen aliphatischen Diolen, insbesondere enthält oder besteht der Polyolstrom aus 1,4-Butandiol.

In einer siebten Ausführungsform betrifft die Erfindung ein Verfahren nach Ausführungsform 5 oder 6, dadurch gekennzeichnet, dass der Polyisocyanatstrom aromatische, aliphatische oder araliphatische Diisocyanate enthält oder daraus besteht, wobei der Polyisocyanatstrom insbesondere 4,4'-Methylendiphenyldiisocyanat (MDI), 1,4-Diisocyanatobutan (BDI), 1,5-Pentamethylendiisocyanat (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan oder 4,4'-Diisocyanatodicyclohexylmethan (H12MDI) oder Mischungen davon enthält oder daraus besteht, wobei der Polyisocyanatstrom insbesondere 1,6-Hexamethylendiisocyanat enthält oder daraus besteht.

In einer achten Ausführungsform betrifft die Erfindung ein Verfahren nach einer der Ausführungsformen 1 bis 7, dadurch gekennzeichnet, dass der Isocyanatzuführungsstrom aromatische, aliphatische oder araliphatische Diisocyanate enthält oder daraus besteht, wobei der Isocyanatzuführungsstrom insbesondere 4,4'-Methylendiphenyldiisocyanat (MDI), 1,4-Diisocyanatobutan (BDI), 1,5-Pentamethylendiisocyanat (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan oder 4,4'-Diisocyanatodicyclohexylmethan (H12MDI) enthält oder daraus besteht, wobei der Isocyanatzuführungsstrom insbesondere 1,6-Hexamethylendiisocyanat enthält oder daraus besteht und / oder der Polyisocyanatstrom und der Isocyanatzuführungsstrom dieselbe Zusammensetzung aufweisen.

In einer neunten Ausführungsform betrifft die Erfindung ein Verfahren gemäß einer der Ausführungsformen 5 bis 8, wobei der Polyisocyanatstrom eine Temperatur von 20 °C bis 25 °C und unabhängig hiervon der Polyolstrom eine Temperatur von 35 °C bis 45 °C aufweist.

In einer zehnten Ausführungsform betrifft die Erfindung ein Verfahren gemäß einer der Ausführungsformen 1 bis 9, wobei vor der Durchführung von Schritt a) aus dem Prepolymerstrom Gase und gasförmige Nebenprodukte entfernt werden, bevorzugt indem der Prepolymerstrom durch eine Entlüftungseinrichtung mit einem Unterdruck von 0,1 mbar bis 10 mbar unter Normaldruck geführt wird, wobei die Entlüftungseinrichtung vorzugsweise an dem Extruder angeordnet ist.

In einer elften Ausführungsform betrifft die Erfindung ein Verfahren gemäß einer der Ausführungsformen 1 bis 10, wobei die Umsetzung in Schritt c) bei einer Temperatur von 150 °C bis 220 °C, bevorzugt von 180 °C bis 200 °C, durchgeführt wird.

In einer zwölften Ausführungsform betrifft die Erfindung ein Verfahren gemäß einer der Ausführungsformen 1 bis 8, wobei der Entgasungsschacht stromabwärts der Einleitung des Isocyanatzuführungsstroms und im in Extruderarbeitsrichtung letzten Drittel des Extruders angeordnet ist, wobei der Entgasungsschacht bevorzugt im letzten Viertel, bevorzugt im letzten Fünftel des Extruders, jeweils in Extruderarbeitsrichtung, angeordnet ist.

In einer dreizehnten Ausführungsform betrifft die Erfindung ein Verfahren gemäß einer der Ausführungsformen 1 bis 12, wobei Schritt c) durchgeführt wird, indem

- in dem Entgasungsschacht ein Entgasungsextruder angeordnet ist, auf dem sich ein Vakuumdom befindet, oder

- in dem Entgasungsschacht eine Rückhalteeinrichtung angeordnet und auf dem Entgasungsschacht ein Vakuumdom positioniert ist, oder

- auf dem Entgasungsschacht ein Vakuumdom angeordnet ist und ein Unterdruck von 50 mbar bis 800 mbar unter Normaldruck angelegt wird.

In einer vierzehnten Ausführungsform betrifft die Erfindung ein Verfahren gemäß einer der Ausführungsformen 1 bis 13, wobei das Verfahren die folgenden Schritte umfasst:

d) Abkühlen des dem thermoplastischen Polyurethans unter seinen Erstarrungspunkt in einer Kühlungseinrichtung, sowie optional

e) Zerkleinerung des thermoplastischen Polyurethans in einer Zerkleinerungseinrichtung.

In einer fünfzehnten Ausführungsform betrifft die Erfindung ein thermoplastisches Polyurethan erhältlich oder erhalten durch ein Verfahren nach einer der Ausführungsformen 1 bis 14.

In einer sechzehnten Ausführungsform betrifft die Erfindung ein thermoplastisches Polyurethan nach Ausführungsform 15, wobei das thermoplastische Polyurethan eine Schmelzeviskosität gemessen als komplexe Viskosität nach ISO 6721-10:1999 bei 200 °C und 1 Hz von 100 Pa*s bis 500 Pa*s, bevorzugt von 110 Pa*s bis 400 Pa*s, aufweist.

In einer siebzehnten Ausführungsform betrifft die Erfindung ein thermoplastisches Polyurethan, das eine Schmelzeviskosität gemessen als komplexe Viskosität nach ISO 6721-10:1999 bei 200 °C und 1 Hz von 100 Pa*s bis 500 Pa*s, bevorzugt von 110 Pa*s bis 400 Pa*s, aufweist.

In einer achtzehnten Ausführungsform betrifft die Erfindung die Verwendung eines thermoplastischen Polyurethans nach einer Ausführungsformen 15 bis 17 zur Herstellung eines Formteils im Spritzgussverfahren, insbesondere zur Herstellung von Innenraumbauteilen von Fahrzeugen, Formkörpern, Fasern oder Folien.

In einer neunzehnten Ausführungsform betrifft die Erfindung eine Vorrichtung zur Durchführung eines Verfahrens nach einem der Ausführungsformen 1 bis 14, umfassend:

eine Prepolymerzuführungsleitung zur Förderung eines Prepolymerstroms, welche einlassseitig in einen Extruder mündet und wobei der Extruder bevorzugt ein gleichläufiger Doppelschneckenextruder ist;

ein in der Prepolymerzuführungsleitung vorgesehenes Druckregelventil zur Regulierung des Drucks des Prepolymerstroms;

ein in der Prepolymerzuführungsleitung angeordnetes und insbesondere stromabwärts des Druckregelventils positioniertes Dreiwegeventil, von dem eine in einen Abfallbehälter mündende Abfallleitung abgeht, über die der Prepolymerstrom insbesondere bei Inbetriebnahme, Außerbetriebnahme oder Störung der Vorrichtung ganz oder teilweise in den Abfallbehälter geführt werden kann;

eine vorzugsweise an der Einmündung der Prepolymerzuführungsleitung in den Extruder angeordnete Entlüftungseinrichtung zur Entfernung von Gasen und gasförmigen Nebenprodukten aus dem Prepolymerstrom;

eine Isocyanatzuführungsleitung zur Förderung eines Isocyanatzuführungsstroms, die in Extruderarbeitsrichtung vorzugsweise stromabwärts der Prepolymerzuführungsleitung in den Extruder mündet;

optional eine der Isocyanatzuführungsleitung zugeordnete dritte Fördereinrichtung zur Förderung des Isocyanatzuführungsstroms;

optional einen an der Isocyanatzuführungsleitung angeschlossenen dritten Massendurchflussmesser;

wobei der Extruder zur Umsetzung der Komponenten des Prepolymerstroms mit den Komponenten des Isocyanatzuführungsstroms zu einem thermoplastischen Polyurethan geeignet und diesem ein Entgasungsschacht zur Entfernung von Gasen und gasförmigen Nebenprodukten mittels Unterdruck von 50 mbar bis 800 mbar unter Normaldruck aus dieser Umsetzung zugeordnet ist, wobei der Entgasungsschacht stromabwärts der Einleitung des Isocyanatzuführungsstroms und im in Extruderarbeitsrichtung letzten Drittel des Extruders angeordnet ist; bevorzugt ist der Entgasungsschacht im letzten Viertel, insbesondere im letzten Fünftel des Extruders angeordnet;

und wobei eine Wasserzuführungsleitung zur Förderung von Wasser stromabwärts der Einleitung des Isocyanatzuführungsstroms und im in Extruderarbeitsrichtung letzten Drittel des Extruders in den Extruder mündet, bevorzugt mündet die Wasserzuführungsleitung im Entgasungsschacht,

optional eine hinter dem Auslass des Extruders angeordnete Kühlungseinrichtung, vorzugsweise ein Wasserbad, zur Abkühlung des thermoplastischen Polyurethans unter seinen Erstarrungspunkt;

optional eine sich an die Kühlungseinrichtung anschließende Zerkleinerungseinrichtung zur Zerkleinerung des abgekühlten thermoplastischen Polyurethans.

In einer zwanzigsten Ausführungsform betrifft die Erfindung eine Vorrichtung nach Ausführungsform 19, dadurch gekennzeichnet, dass die Vorrichtung die folgenden weiteren Komponenten umfasst:

einen Isocyanat-Vorratsbehälter, von dem eine Isocyanatleitung zur Förderung eines Polyisocyanatstroms abgeht, die in eine erste Mischungseinrichtung mündet;

optional eine der Isocyanatleitung zugeordnete erste Fördereinrichtung zur Förderung des Polyisocyanatstroms;

optional einen an der Isocyanatleitung angeschlossenen ersten Massendurchflussmesser;

einen Polyol-Vorratsbehälter, von dem eine Polyolleitung zur Förderung eines Polyolstroms abgeht, die in die erste Mischungseinrichtung mündet, wobei die Polyolleitung insbesondere stromaufwärts der Mischungseinrichtung mit der Isocyanatleitung zusammengeführt wird;

optional eine der Polyolleitung zugeordnete zweite Fördereinrichtung zur Förderung des Polyolstroms;

optional einen an der Polyolleitung angeschlossenen zweiten Massendurchflussmesser;

eine Kreislaufzuführungsleitung zur Förderung eines aus der ersten Mischungseinrichtung austretenden Mischungsstroms, die in eine Kreislaufleitung zur Förderung des Kreislaufstroms und chemischen Umsetzung der Komponenten des Kreislaufstroms mit den Komponenten des Mischungsstroms mündet;

wobei die Kreislaufleitung vorzugsweise in Strömungsrichtung eine zweite Mischungseinrichtung, eine temperierbare Mischungseinrichtung sowie eine temperierbare Fördereinrichtung umfasst;

und wobei die Prepolymerzuführungsleitung von der Kreislaufleitung abgeht

und wobei die Isocyanatzuführungsleitung vom Isocyanat-Vorratsbehälter oder der Isocyanatleitung abgeht.

In einer einundzwanzigsten Ausführungsform betrifft die Erfindung eine Vorrichtung nach Ausführungsform 19 oder 20, dadurch gekennzeichnet, dass

- in dem Entgasungsschacht ein Entgasungsextruder angeordnet ist und auf dem ein Vakuumdom geeignet zur Anlegung eines Unterdrucks von 50 mbar bis 800 mbar unter Normaldruck, positioniert ist,
oder

- in dem Entgasungsschacht eine Rückhalteeinrichtung angeordnet und auf dem Entgasungsschacht ein Vakuumdom geeignet zur Anlegung eines Unterdrucks von 50 mbar bis 800 mbar unter Normaldruck positioniert ist,
oder

- auf dem Entgasungsschacht ein Vakuumdom geeignet zur Anlegung eines Unterdrucks von 50 mbar bis 800 mbar unter Normaldruck angeordnet ist.

In einer zweiundzwanzigsten Ausführungsform betrifft die Erfindung eine Vorrichtung nach einer der Ausführungsformen 19 bis 21, wobei als erste Fördereinrichtung und / oder als zweite Fördereinrichtung unabhängig voneinander eine Zahnringpumpe und / oder als temperierbare Fördereinrichtung eine Zahnradpumpe eingesetzt wird.

In einer dreiundzwanzigsten Ausführungsform betrifft die Erfindung eine Vorrichtung nach einer der Ausführungsformen 19 bis 22, wobei als erste und / oder zweite Mischungseinrichtung und / oder als temperierbare Mischungseinrichtung unabhängig voneinander ein Statikmischer eingesetzt wird.

In einer vierundzwanzigsten Ausführungsform betrifft die Erfindung eine Vorrichtung nach einer der Ausführungsformen 19 bis 23, wobei die Kreislaufleitung aus doppelwandigen, mit einem Heizmittel beheizbaren Leitungen besteht, wobei bevorzugt auch die zweite Mischungseinrichtung, die temperierbare Mischungseinrichtung sowie die temperierbare Fördereinrichtung mit einem Heizmittel beheizbar sind.

In einer fünfundzwanzigsten Ausführungsform betrifft die Erfindung eine Vorrichtung nach Ausführungsform 24, wobei das Heizmittel für eine Heiz-Temperatur von 160 °C bis 220 °C geeignet ist, bevorzugt von 170 °C bis 190 °C.

In einer sechsundzwanzigsten Ausführungsform betrifft die Erfindung eine Vorrichtung nach einer der Ausführungsformen 19 bis 25, wobei der Extruder ein Planetwalzenextruder oder ein Schneckenextruder ist, wobei der Extruder bevorzugt ein gleichläufiger Doppelschneckenextruder ist.

In einer siebenundzwanzigsten Ausführungsform betrifft die Erfindung eine Vorrichtung nach einer der Ausführungsformen 19 bis 26, wobei im Bereich der Einmündung der Wasserzuführungsleitung (33) in den Extruder (18) und/ oder stromabwärts von dieser zumindest in einer Zone des Extruders die Schneckenwellen mit Knetelementen besetzt sind.

### Beispiele

Die vorliegende Erfindung wird anhand der nachfolgenden Beispiele weiter erläutert, ohne jedoch darauf beschränkt zu sein.

Es wurden thermoplastische Polyurethane mittels Reaktivextrusion hergestellt, wobei während der Durchführung der erfindungsgemäßen Beispiele Wasser in den Extruder geleitet wurde und bei Referenzbeispiel 1 kein Wasser in den Extruder geleitet wurde. Danach wurde die Schmelzviskosität gemessen als komplexe Viskosität nach ISO 6721-10:1999 bestimmt.

### Bestimmung der komplexen Viskosität:

Die komplexe Viskosität wurde mit einem ARES-G2 Oszillationsrheometer des Herstellers TA-Instruments nach ISO 6721-10:1999 gemessen. Dazu wurde die Probe zuvor mindestens 16 Stunden im Trockenschrank bei 90 °C getrocknet und anschließend bei 200 °C innerhalb von 30 Sekunden zu Platten von 25 mm bzw. 35 mm Durchmesser verpresst. Diese Proben wurden in den auf die Messtemperatur vorgeheizte Ofen des Rotationsrheometers platziert. Nachdem die Probe die Messtemperatur erreicht hatte, wurde die oszillierende Messung in Platte-Platte Geometrie unter Stickstoffatmosphäre gestartet. Bei der Messtemperatur wurden Speicher- und Verlustschubmodul im Bereich anfangend bei 100 Hz bis 0,01 Hz bestimmt. Aus den Messwerten bei 1 Hz wird die komplexe Viskosität berechnet.

### Referenzbeispiel 1 und erfindungsgemäßes Beispiel 1

Bei der Durchführung von Referenzbeispiel 1 und im erfindungsgemäßen Beispiel 1 wurde die Extruderkonfiguration A verwendet.

### Extruderkonfiguration A

Eine Prepolymer-Dosierung mit Entgasung, gefolgt von einem rückfördernden Element mit einer Länge von 12 mm, einer Förderzone von 48 mm mit Elementen einer Steigung von 48 mm, in der das HDI dosiert wurde, gefolgt von einer Knetzone von 96 mm, einer Förderzone von 312 mm Länge mit einer Steigung von 12 mm, eine Zone von 72 mm Länge mit Förderelementen der Steigung 24 mm, eine Zone mit rückfördernden Elementen mit einer Länge von 12 mm der Steigung 12 mm, eine Förderzone mit einer Länge von 120 mm und Elementen mit 48 mm Steigung mit Entgasung und eine Zone mit Förderelementen der Steigung 24 mm mit einer Länge von 144 mm als Druckaufbauzone vor der Düse.

Referenzbeispiel 1: Darstellung eines Prepolymers und Reaktivextrusion

Darstellung eines Prepolymers

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom A bestehend aus 1,6-Hexamethylendiisocyanat zu einem Statikmischer 7 gefördert. Der Durchsatz des Polyisocyanatstroms A wurde mittels eines Massendurchflussmessers 3 (Firma Bronkhorst, Mini Cori-Flow M1X, max. Durchfluss 12 kg/h) gemessen. Die Temperatur des 1,6-Hexamethylendiisocyanats betrug dabei Raumtemperatur.

Aus einer 250 - Liter - Vorlage 4 für 1,4-Butandiol wurde mit Hilfe einer Zahnringpumpe 5 (Firma HNP, MZR 7205) ein Polyolstrom B bestehend aus 1,4-Butandiol zum Statikmischer 7 gefördert. Der Durchsatz des Polyolstroms B wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.

In dem Statikmischer 7 (Sulzer SMX, Durchmesser 6 mm, Verhältnis von Länge zu Durchmesser L/D = 10) wurden der Polyisocyanatstrom A und der Polyolstrom B miteinander gemischt, so dass ein Mischungsstrom C erhalten wurde. Die Massenströme des Polyisocyanatstroms A und des Polyolstroms B wurden so eingestellt, dass der Isocyanat-Index im Mischungsstrom C 78 betrug.

Mischungsstrom C wurde über eine Einmündung 28 in die Kreislaufleitung 29 geleitet, in dem ein Kreislaufstrom D in einem Kreislauf geführt wurde. Stromabwärts der Einmündung 28 wurde der Kreislaufstrom D in einen Statikmischer 8 (Statikmischer äquivalent zu Sulzer SMX, Innendurchmesser 34 mm, L/D=20) geführt. Die Temperatur des Kreislaufstromes D betrug 182 °C.

Stromabwärts des Statikmischers 8 wurde der Kreislaufstrom D in einen temperierbaren statischen Mischer 9 geführt. Dort fand die Reaktion der Monomere des Mischungsstroms C untereinander bzw. mit den Molekülen des Kreislaufstroms D zum großen Teil statt und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt / gekühlt. Die Heizmitteltemperatur am Eintritt betrug 180 °C.

Aus dem temperierbaren statischen Mischer 9 trat der Kreislaufstrom D mit einer Temperatur von 183 °C aus. Stromabwärts des temperierbaren statischen Mischers 9 wurde an einer Einmündung 11 ein Prepolymerstrom E aus dem Kreislaufstrom D abgeteilt und der Kreislaufstrom D weiter zu einer Zahnradpumpe 10 geführt. Der Prepolymerstrom E wurde in einen Extruder 18 geleitet.

Der Druck des Kreislaufstroms D wurde an einer Zahnradpumpe 10 erhöht. Die Zahnradpumpe 10 (Firma Witte Chem 25,6-3) hatte ein Volumen pro Umdrehung von 25,6 Kubikzentimeter und eine Drehzahl von 50 pro Minute. Der Kreislaufstrom D wurde stromabwärts der Pumpe an Einmündung 28 mit Mischungsstrom C vereinigt, wie bereits beschrieben.

Die Kreislaufleitung 29 bestand aus doppelwandig ausgeführten Rohrleitungen, die mit Thermoöl beheizt waren. Die Heizmitteltemperatur betrug 182 °C. Der Statikmischer 8, der temperierbare statischen Mischer 9 und die Zahnradpumpe 10 bestanden aus Apparaten, die mit Thermoöl beheizt waren. Die Heizmitteltemperatur betrug 182 °C.

Herstellung von thermoplastischem Polyurethan durch Reaktivextrusion
Die Reaktivextrusion wurde in einem Extruder 18 bei einer Temperatur von 200 °C und einer Drehzahl von 66 Umdrehungen pro Minute durchgeführt. Der Extruder 18 war ein ZSK 26 MC der Firma Coperion, mit einem Schneckendurchmesser von 26 mm und einem Länge zu Durchmesser Verhältnis von 36 bis 40.

An dem Extruder 18 befand sich eine Entlüftung 17, die bei ca. 1 mbar Unterdruck gegenüber dem Normaldruck betrieben wurde und in der der Prepolymerstrom E von eventuell mit dem Polyisocyanatstrom A und dem Polyolstrom B eingeschleppten Inertgasen und möglichen gasförmigen Reaktionsprodukten befreit wurde.

Aus Vorlage 1 wurde mit Hilfe einer Mikrozahnringpumpe 15 (MZR 6355 der Firma HNP) ein Isocyanatzuführungsstrom F bestehend aus 1,6-Hexamethylendiisocyanat entnommen. Der Durchsatz des Isocyanatzuführungsstroms F wurde mittels eines Massendurchflussmessers 16 (Firma Bronkhorst, Mini Cori-Flow, M1X, maximaler Durchfluss 2 kg/h) gemessen. Die Temperatur des 1,6-Hexamethylendiisocyanat betrug Raumtemperatur. Der Isocyanatzuführungsstrom F wurde stromabwärts des Prepolymerstroms E in den Extruder 18 geleitet. In dem Extruder 18 wurde der Prepolymerstrom E mit dem Isocyanatzuführungsstrom F bei einem Isocyanatindex von 99 zu einem thermoplastischen Polyurethan G umgesetzt.

Am in Durchflussrichtung betrachtet letzten Drittel des Extruders 18 war eine Entgasung 19 angeordnet, an der das thermoplastische Polyurethan G bei 200 mbar unter Normaldruck mit Hilfe eines Vakuumdoms, der auf einem Entgasungsschacht des Extruders angeordnet war, von flüchtigen Bestandteilen befreit wurde. Das thermoplastische Polyurethan G wurde nach dem Austritt aus dem Extruder 18 durch zwei Düsen in einem mit deionisierten Wasser (VE-Wasser) gefüllten Wasserbad 20 abgekühlt und durch einen Granulator 21 zu Granulat zerschnitten.

Erfindungsgemäßes Beispiel 1:

Bei der Durchführung des erfindungsgemäßen Beispiels 2 wurde das Prepolymer wie im Vergleichsbeispiel 1 hergestellt und Extruderkonfiguration A verwendet, wobei im Unterschied zu Vergleichsbeispiel 1 stetig deinionisiertes Wasser mit einer Dosierrate von 1 g/Minute mit Hilfe einer Wasserzuführungsleitung 33 in Form einer Kanüle im Entgasungsschacht 19 in den Extruder geleitet wurde. Ausgehend von der Beschreibung von Extruderkonfiguration A wurde das Wasser in der Förderzone mit einer Länge von 120 mm und Elementen mit 48 mm, in den Extruder geleitet.

Erfindungsgemäße Beispiele 2 und 3

Bei der Durchführung der erfindungsgemäßen Beispiele 2 und 3 wurde das Prepolymer wie im Vergleichsbeispiel 1 hergestellt und es wurde ein Extruder mit der folgenden Extruderkonfiguration B verwendet. Extruderkonfiguration B unterscheidet sich insbesondere von Extruderkonfiguration A dadurch, dass sie eine weitere Knetzone aufweist: Eine Prepolymer-Dosierung mit Entgasung, gefolgt von einem rückfördernden Element mit einer Länge von 12 mm, einer Förderzone von 48 mm mit Elementen einer Steigung von 48 mm, in der 1,6-Hexamethylendiisocyanat dosiert wurde, gefolgt von einer Knetzone von 96 mm, einer Förderzone von 240 mm Länge mit einer Steigung von 12 mm, eine Zone von 120 mm Länge mit Förderelementen der Steigung 24 mm, eine Zone mit rückfördernden Elementen mit einer Länge von 12 mm der Steigung 24 mm, eine Knetzone mit einer Länge von 96mm, in die Wasser dosiert wurde, eine Zone mit rückfördernden Elementen mit einer Länge von 12 mm der Steigung 24 mm , eine Zone von Elementen mit 48 mm Steigung und einer Länge von 72 mm, in der die Entgasung stattfand und mit und einer Zone mit Förderelementen der Steigung 24 mm mit einer Länge von 144 mm als Druckaufbauzone vor der Düse.

Erfindungsgemäßes Beispiel 2:

Bei der Durchführung des erfindungsgemäßen Beispiels 2 wurde Wasser über eine Wasserzuführungsleitung 33, die in Extruderarbeitsrichtung 50 mm vor der Entgasung 19 in den Extruder mündete, in den Extruder 18 geleitet. Während der Durchführung des Versuchs wurde stetig deionisiertes Wasser mit einer Dosierrate von 1 g/Minute dem in den Extruder 18 geleitet.

Erfindungsgemäßes Beispiel 3:

Bei der Durchführung des erfindungsgemäßen Beispiels 3 wurde Wasser über einen Einlass 33, der in Extruderarbeitsrichtung 50 mm vor der Entgasung 19 lag, in den Extruder 18 geleitet. Während der Durchführung des Versuchs wurde stetig deionisiertes Wasser mit einer Dosierrate von 2 g/Minute in den Extruder 18 geleitet.

Tabelle 1: Zusammenfassung der Experimente

|  | Referenz | Erfindungsgemäß | | |
|---|---|---|---|---|
|  | 1 | 1 | 2 | 3 |
| Extruderkonfiguration | A | A | B | B |
| Strom A (HDI) [kg/h] | 2,912 | 2,910 | 2,911 | 2,912 |
| Strom B (BDO) [kg/h] | 1,999 | 2,001 | 1,998 | 2,001 |
| Strom F (HDI) [kg/h] | 0,783 | 0,784 | 0,784 | 0,784 |
| Prepolymerstrom E [kg/h] | 4,911 | 4,911 | 4,909 | 4,913 |
| Wasserdosierung [g/min] | 0 | 1 | 1 | 2 |
| Wasserdosierung [kg/h] | 0 | 0,06 | 0,06 | 0,12 |
| Schmelzeviskosität gemessen als komplexe Viskosität nach ISO 6721-10: 1999 bei 200 °C und 1 Hz [Pas] | 6190 | 394 | 206 | 138 |

Die Beispiele zeigen, dass die mit dem erfindungsgemäßen Verfahren hergestellten Polyurethane eine erheblich niedrigere Schmelzviskosität aufweisen, als das Polyurethan aus Referenzbeispiel 1. Die Schmelzviskosität des Polyurethans aus dem erfindungsgemäßen Beispiel 1 war 15 mal geringer als die Schmelzviskosität des Polyurethans aus dem Referenzbeispiel. Diejenige des erfindungsgemäßen Beispiels 3 sogar fast 45 mal niedriger.

Somit lässt sich durch eine leichte Modifikation des Verfahrens eine sehr große Änderung des hergestellten Produkts herbeiführen. Die mit dem erfinderischen Verfahren hergestellten Produkte eignen sich auf Grund ihrer niedrigen Schmelzeviskosität hervorragend für Spritzgussanwendungen. Das Referenzprodukt weist hingegen eine zu hohe Schmelzeviskosität auf, um in einem Spritzgussverfahren verarbeitet zu werden. Bei der Verarbeitung des Referenzprodukts in einem Spritzgussverfahren wären sehr viel höhere Einspritzdrücke notwendig als für die Verarbeitung eines erfindungsgemäßen Polyurethans, bzw. bei gleichem Einspritzdruck wie bei den erfindungsgemäßen Polyurethanen wären nur sehr kurze Fließwege möglich. Des Weiteren können die nach dem erfindungsgemäßen Verfahren hergestellten Polyurethane aufgrund ihrer niedrigen Schmelzeviskosität auch besonders gut für die Darstellung von komplexen Geometrien, wie z.B. engen Spalten, verwendet werden.

## Bezugszeichenliste

| A | Polyisocyanatstrom |
|---|---|
| B | Polyolstrom |
| C | Mischungsstrom |
| D | Kreislaufstrom |
| E | Prepolymerstrom |
| F | Isocyanatzuführungsstrom |
| G | thermoplastisches Polyurethan |
| 1 | Isocyanat-Vorratsbehälter |
| 2 | erste Fördereinrichtung |
| 3 | erster Massendurchflussmesser |
| 4 | Polyol-Vorratsbehälter |
| 5 | zweite Fördereinrichtung |
| 6 | zweiter Massendurchflussmesser |
| 7 | erste Mischungseinrichtung |
| 8 | zweite Mischungseinrichtung |
| 9 | temperierbare Mischungseinrichtung |
| 10 | temperierbare Fördereinrichtung |
| 11 | vierte Einmündung |
| 12 | Druckregelventil |
| 13 | Dreiwegeventil |
| 14 | Abfallbehälter |
| 15 | dritte Fördereinrichtung |
| 16 | dritter Massendurchflussmesser |
| 17 | Entlüftungseinrichtung |
| 18 | Extruder |
| 19 | Entgasungsschacht |
| 20 | Kühlungseinrichtung |
| 21 | Zerkleinerungseinrichtung |
| 22 | Isocyanatleitung |
| 23 | erste Einmündung |
| 24 | Isocyanatzuführungsleitung |
| 25 | Polyolleitung |
| 26 | zweite Einmündung |
| 27 | Kreislaufzuführungsleitung |
| 28 | dritte Einmündung |
| 29 | Kreislaufleitung |
| 30 | Prepolymerzuführungsleitung |
| 31 | Abfallleitung |
| 32 | Vorrichtung |
| 33 | Wasserzuführungsleitung |

**Patentansprüche**

1. Verfahren zur Herstellung eines thermoplastischen Polyurethans (G) aus einem OH-funktionellen Prepolymer und einem Isocyanat mittels Reaktivextrusion umfassend die folgende Schritte:

   a) Einleiten eines Prepolymerstroms (E) enthaltend OH-funktionelle Prepolymere in einen Extruder (18),
   b) Einleiten eines Isocyanatzuführungsstroms (F) in den Extruder (18) in Extruderarbeitsrichtung stromabwärts der Einleitung des Prepolymerstroms (E), wobei die Einleitung in der Weise erfolgt, dass die im Prepolymerstrom (E) enthaltenen OH-funktionellen Prepolymere und das im Isocyanatzuführungsstrom (F) enthaltene Polyisocyanat in einem Isocyanat-Index NCO-Index von 85 bis 120 zueinander stehen,
   c) Umsetzen des Prepolymerstroms (E) mit dem Isocyanatzuführungsstrom (F) in dem Extruder (18) unter Erhalt des thermoplastischen Polyurethans (G) als Extrudat, wobei Gase und / oder gasförmige Nebenprodukte der Umsetzung aus dem Extruder (18) durch Anlegen eines Unterdrucks von 50 mbar bis 800 mbar unter Normaldruck mittels eines an dem Extruder (18) angeordneten Entgasungsschachtes (19) entfernt werden, und wobei stromabwärts der Einleitung des Isocyanatzuführungsstroms (F) durch eine Wasserzuführungsleitung (33) Wasser in den Extruder (18) eingeleitet wird, wobei der Massenstrom des eingeleiteten Wassers zur Summe der Massenströme des Prepolymerstroms (E) und des Isocyanatzuführungsstroms (F) in einem Verhältnis von 1: 30 bis 1: 200 stehen.

2. Verfahren nach Anspruch 1, **dadurch gekennzeichnet, dass** der Massenstrom des eingeleiteten Wassers zur Summe der Massenströme des Prepolymerstroms (E) und des Isocyanatzuführungsstroms (F) in einem Verhältnis von 1: 40 bis 1: 125 stehen, wobei die Massenströme bevorzugt in einem Verhältnis von 1: 40 bis 1: 100 stehen.

3. Verfahren nach Anspruch 1 oder 2, **dadurch gekennzeichnet, dass** das Wasser im in Extruderarbeitsrichtung letzten Drittel des Extruders (18) in den Extruder (18) eingeleitet wird, wobei das Wasser bevorzugt durch den Entgasungsschacht (19) in den Extruder (18) geleitet wird.

4. Verfahren nach einem der vorstehenden Ansprüche, **dadurch gekennzeichnet, dass** die im Extruder (18) befindliche Masse im Bereich der Einmündung der Wasserzuführungsleitung (33) in den Extruder (18) und/ oder stromabwärts von dieser durch Knetelemente geknetet wird.

5. Verfahren nach einem der vorstehenden Ansprüche, **dadurch gekennzeichnet, dass** der Prepolymerstrom (E) durch die folgenden Schritte erzeugt wird:

   - Mischen eines Polyisocyanatstroms (A) und eines Polyolstroms (B) in einer ersten Mischungseinrichtung (7), so dass ein Mischungsstrom (C) erhalten wird, wobei die Massenströme des Polyisocyanatstroms (A) und des Polyolstroms (B) so eingestellt werden, dass der Isocyanat-Index im Mischungsstrom (C) von 55 bis 85 beträgt,
   - Einleiten des Mischungsstroms (C) in einen Kreislaufstrom (D), der in einem Kreislauf geführt wird, wobei die Monomere des Polyisocyanatstroms (A) und des Polyolstroms (B) im Kreislaufstrom (D) zu OH-funktionellen Prepolymeren reagieren,
   - Abteilen eines Teilstroms vom Kreislaufstrom (D) als Prepolymerstrom (E) und Bereitstellung des Prepolymerstroms (E).

6. Verfahren nach Anspruch 5, **dadurch gekennzeichnet, dass** der Polyolstrom (B) C2 bis C10 aromatische, aliphatische oder araliphatische Diole oder Mischungen davon enthält oder daraus besteht, wobei der Polyolstrom (B) insbesondere 1,4-Butandiol enthält oder daraus besteht und / oder der Polyisocyanatstrom (A) aromatische, aliphatische oder araliphatische Diisocyanate enthält oder daraus besteht, wobei der Polyisocyanatstrom (A) insbesondere 1,6-Hexamethylendiisocyanat enthält oder daraus besteht.

7. Verfahren nach einem der vorstehenden Ansprüche, **dadurch gekennzeichnet, dass** der Isocyanatzuführungsstrom (F) aromatische, aliphatische oder araliphatische Diisocyanate enthält oder daraus besteht, wobei der Isocyanatzuführungsstrom (F) insbesondere 1,6-Hexamethylendiisocyanat enthält oder daraus besteht und / oder der Polyisocyanatstrom (A) und der Isocyanatzuführungsstrom (F) dieselbe Zusammensetzung aufweisen.

8. Verfahren nach einem der vorstehenden Ansprüche, **dadurch gekennzeichnet, dass** vor der Durchführung von Schritt a) aus dem Prepolymerstrom (E) Gase und gasförmige Nebenprodukte entfernt werden, bevorzugt indem der Prepolymerstrom (E) durch eine Entlüftungseinrichtung (17) mit einem Unterdruck von 0,1 mbar bis 10 mbar unter Normaldruck geführt wird, wobei die Entlüftungseinrichtung (17) vorzugsweise an dem Extruder (18) angeordnet ist.

9. Verfahren nach einem der vorstehenden Ansprüche, **dadurch gekennzeichnet, dass** der Entgasungsschacht (19) stromabwärts der Einleitung des Isocyanatzuführungsstroms (F) und im in Extruderarbeitsrichtung letzten Drittel des Extruders (18) angeordnet ist, wobei der Entgasungsschacht (19) bevorzugt im letzten Viertel, jeweils in Extruderarbeitsrichtung, angeordnet ist.

10. Thermoplastisches Polyurethan erhältlich oder erhalten durch ein Verfahren nach einem der Ansprüche 1 bis 9.

11. Thermoplastisches Polyurethan nach Anspruch 11, **dadurch gekennzeichnet, dass** das thermoplastische Polyurethan eine Schmelzeviskosität gemessen als komplexe Viskosität nach ISO 6721-10:1999 bei 200 °C und 1 Hz von 100 Pa*s bis 500 Pa*s, bevorzugt von 110 Pa*s bis 400 Pa*s, aufweist.

12. Thermoplastisches Polyurethan, **dadurch gekennzeichnet, dass** das thermoplastische Polyurethan eine Schmelzeviskosität gemessen als komplexe Viskosität nach ISO 6721-10:1999 bei 200 °C und 1 Hz von 100 Pa*s bis 500 Pa*s, bevorzugt von 110 Pa*s bis 400 Pa*s, aufweist.

13. Verwendung eines thermoplastischen Polyurethans nach einem der Ansprüche 10 bis 12 zur Herstellung eines Formteils im Spritzgussverfahren, insbesondere zur Herstellung von Innenraumbauteilen von Fahrzeugen, Formkörpern, Fasern oder Folien.

14. Vorrichtung zur Durchführung eines Verfahrens nach einem der Ansprüche 1 bis 9, umfassend:

eine Prepolymerzuführungsleitung (30) zur Förderung eines Prepolymerstroms (E), welche einlassseitig in einen Extruder (18) mündet und wobei der Extruder bevorzugt ein gleichläufiger Doppelschneckenextruder ist; ein in der Prepolymerzuführungsleitung (30) vorgesehenes Druckregelventil (12) zur Regulierung des Drucks des Prepolymerstroms (E);
ein in der Prepolymerzuführungsleitung (30) angeordnetes und insbesondere stromabwärts des Druckregelventils (12) positioniertes Dreiwegeventil (13), von dem eine in einen Abfallbehälter (14) mündende Abfallleitung (31) abgeht, über die der Prepolymerstrom (E) insbesondere bei Inbetriebnahme, Außerbetriebnahme oder Störung der Vorrichtung ganz oder teilweise in den Abfallbehälter (14) geführt werden kann;
eine vorzugsweise an der Einmündung der Prepolymerzuführungsleitung (30) in den Extruder (18) angeordnete Entlüftungseinrichtung (17) zur Entfernung von Gasen und gasförmigen Nebenprodukten aus dem Prepolymerstrom (E);
eine Isocyanatzuführungsleitung (24) zur Förderung eines Isocyanatzuführungsstroms (F), die in Extruderarbeitsrichtung vorzugsweise stromabwärts der Prepolymerzuführungsleitung (30) in den Extruder (18) mündet; wobei der Extruder (18) zur Umsetzung der Komponenten des Prepolymerstroms (E) mit den Komponenten des Isocyanatzuführungsstroms (F) zu einem thermoplastischen Polyurethan (G) geeignet und diesem ein Entgasungsschacht (19) zur Entfernung von Gasen und gasförmigen Nebenprodukten mittels Unterdruck von 50 mbar bis 800 mbar unter Normaldruck aus dieser Umsetzung zugeordnet ist, wobei der Entgasungsschacht (19) bevorzugt stromabwärts der Einleitung des Isocyanatzuführungsstroms (F) und im in Extruderarbeitsrichtung letzten Drittel des Extruders (18) angeordnet ist; weiter bevorzugt ist der Entgasungsschacht im letzten Viertel, insbesondere im letzten Fünftel des Extruders angeordnet;
und wobei eine Wasserzuführungsleitung (33) zur Einleitung von Wasser stromabwärts der Einleitung des Isocyanatzuführungsstroms (F) in den Extruder (18) mündet, bevorzugt im in Extruderarbeitsrichtung letzten Drittel des Extruders (18) in diesen oder in den Entgasungsschacht (19), optional eine hinter dem Auslass des Extruders (18) angeordnete Kühlungseinrichtung (20), vorzugsweise ein Wasserbad, zur Abkühlung des thermoplastischen Polyurethans (G) unter seinen Erstarrungspunkt;
optional eine sich an die Kühlungseinrichtung (20) anschließende Zerkleinerungseinrichtung (21) zur Zerkleinerung des abgekühlten thermoplastischen Polyurethans (G).

15. Vorrichtung nach Anspruch 14, **dadurch gekennzeichnet, dass** die Wasserzuführungsleitung (33) mit einer Steuerungseinrichtung gekoppelt ist, welche geeignet ist, den Massenstrom des eingeleiteten Wassers zur Summe der Massenströme des Prepolymerstroms (E) und des Isocyanatzuführungsstroms (F) in einem Verhältnis von 1: 30 bis 1: 200 einzustellen.

16. Vorrichtung nach Anspruch 14 oder 15, **dadurch gekennzeichnet, dass** die Vorrichtung die folgenden weiteren Komponenten umfasst:

einen Isocyanat-Vorratsbehälter (1), von dem eine Isocyanatleitung (22) zur Förderung eines Polyisocyanatstroms (A) abgeht, die in eine erste Mischungseinrichtung (7) mündet;

einen Polyol-Vorratsbehälter (4), von dem eine Polyolleitung (25) zur Förderung eines Polyolstroms (B) abgeht, die in die erste Mischungseinrichtung (7) mündet, wobei die Polyolleitung (25) insbesondere stromaufwärts der Mischungseinrichtung (7) mit der Isocyanatleitung (22) zusammengeführt wird;

eine Kreislaufzuführungsleitung (27) zur Förderung eines aus der ersten Mischungseinrichtung (7) austretenden Mischungsstroms (C), die in eine Kreislaufleitung (29) zur Förderung des Kreislaufstroms (D) und chemischen Umsetzung der Komponenten des Kreislaufstroms (D) mit den Komponenten des Mischungsstroms (C) mündet;

wobei die Kreislaufleitung (29) vorzugsweise in Strömungsrichtung eine zweite Mischungseinrichtung (8), eine temperierbare Mischungseinrichtung (9) sowie eine temperierbare Fördereinrichtung (10) umfasst;

und wobei die Prepolymerzuführungsleitung (30) von der Kreislaufleitung (29) abgeht und wobei die Isocyanatzuführungsleitung (24) vom Isocyanat-Vorratsbehälter (1) oder der Isocyanatleitung (22) abgeht.

17. Vorrichtung nach einem der Ansprüche 14 bis 16, **dadurch gekennzeichnet, dass** im Bereich der Einmündung der Wasserzuführungsleitung (33) in den Extruder (18) und/ oder stromabwärts von dieser zumindest in einer Zone des Extruders (18) die Schneckenwellen mit Knetelementen besetzt sind.

**Fig. 1**

Fig. 2

Fig. 3

Europäisches
Patentamt

European
Patent Office

Office européen
des brevets

# EUROPÄISCHER RECHERCHENBERICHT

**Nummer der Anmeldung**

EP 19 21 6814

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 021 323 A1 (BAYER AG [DE]) 7. Januar 1981 (1981-01-07) | 1,4,8 | INV. B01J19/20 |
| A | * Seite 22, Zeile 23 - Zeile 25 * | 2,3,5-7, 9,14-17 | B29B7/84 B29C48/29 B29C48/76 |
| Y | DE 10 2010 025995 A1 (RUST & MITSCHKE ENTEX [DE]) 5. Januar 2012 (2012-01-05) | 1,4,8 | B29C48/92 B29C67/24 |
| A | * Absätze [0003], [0013], [0021], [0023], [0026], [0028]; Abbildung 2 * | 9,14-17 | C08G18/08 C08G18/10 |
| Y | US 2009/198036 A1 (DUFFY SEAN G [US]) 6. August 2009 (2009-08-06) * Absätze [0004], [0029]; Ansprüche 1-5; Abbildung 1; Tabelle 8 * | 1,4,8 | |
| A | EP 0 534 295 A2 (BASF AG [DE]) 31. März 1993 (1993-03-31) * Seite 5, Zeile 41 - Zeile 46; Beispiel 1 * | 1 | |
| X | K W Lem ET AL: "Effect of Hard Segment Molecular Weight on Concentrated Solution and Bulk Properties of Ether Based Thermoplastic Polyurethanes", Nanoscience and Nanoengineering, 1. Januar 2013 (2013-01-01), Seiten 71-88, XP055698654, DOI: 10.13189/nn.2013.010110 Gefunden im Internet: URL:http://www.hrpub.org/download/201308/nn.2013.010110.pdf [gefunden am 2020-05-26] * Abbildung 16; Beispiele HS4, HS5 * | 10-13 | RECHERCHIERTE SACHGEBIETE (IPC) B01J B29B B29C B29K C08G |

-/--

Der vorliegende Recherchenbericht wurde für alle Patentansprüche erstellt

| Recherchenort | Abschlußdatum der Recherche | Prüfer |
|---|---|---|
| München | 27. Mai 2020 | Mans, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 19 21 6814

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Basf: "think, create, elastollan, thermoplastic polyurethane elastomers (TPU),", elastollan infopoint, 1. September 2016 (2016-09-01), Seiten 1-64, XP055698656, internet Gefunden im Internet: URL:https://www.basf.com/kr/documents/ko/product/Thermoplastis%20Polyurethan_Think,%20Create%20Elastollan.pdf. [gefunden am 2020-05-26] * Seiten 9,18,30 - Seite 33 * | 13 | |
| | ----- | | |
| A | US 2012/029145 A1 (BROWN WADE H [US]) 2. Februar 2012 (2012-02-02) * Absätze [0109], [0111], [0144], [0261]; Abbildung 1 * * Absätze [0144], [0250], [0251], [0275], [0284] * | 1 | |
| | ----- | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 27. Mai 2020 | Mans, Peter |

EPO FORM 1503 03.82 (P04C03)

**EP 3 838 396 A1**

## ANHANG ZUM EUROPÄISCHEN RECHERCHENBERICHT
## ÜBER DIE EUROPÄISCHE PATENTANMELDUNG NR.

EP 19 21 6814

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2020

| Im Recherchenbericht angeführtes Patentdokument | Datum der Veröffentlichung | Mitglied(er) der Patentfamilie | Datum der Veröffentlichung |
|---|---|---|---|
| EP 0021323 A1 | 07-01-1981 | CA 1176396 A | 16-10-1984 |
| | | DE 2925944 A1 | 22-01-1981 |
| | | EP 0021323 A1 | 07-01-1981 |
| | | JP S5610517 A | 03-02-1981 |
| | | US 4286080 A | 25-08-1981 |
| DE 102010025995 A1 | 05-01-2012 | KEINE | |
| US 2009198036 A1 | 06-08-2009 | AU 2008345105 A1 | 09-07-2009 |
| | | CA 2710918 A1 | 09-07-2009 |
| | | CN 101952335 A | 19-01-2011 |
| | | EP 2231737 A1 | 29-09-2010 |
| | | JP 5879034 B2 | 08-03-2016 |
| | | JP 2011508067 A | 10-03-2011 |
| | | RU 2010127973 A | 10-02-2012 |
| | | US 2009198036 A1 | 06-08-2009 |
| | | WO 2009086459 A1 | 09-07-2009 |
| EP 0534295 A2 | 31-03-1993 | AT 146196 T | 15-12-1996 |
| | | CA 2079245 A1 | 27-03-1993 |
| | | DE 4132015 A1 | 01-04-1993 |
| | | DE 59207659 D1 | 23-01-1997 |
| | | DK 0534295 T3 | 30-12-1996 |
| | | EP 0534295 A2 | 31-03-1993 |
| | | ES 2095377 T3 | 16-02-1997 |
| | | JP H05255471 A | 05-10-1993 |
| | | US 5247049 A | 21-09-1993 |
| US 2012029145 A1 | 02-02-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 105001626
- CN 107141437
- DE 44029434
- EP 0708124 A

**In der Beschreibung aufgeführte Nicht-Patentliteratur**

- **KLEMENS KOHLGRÜBER.** *Co-Rotating Twin-Screw extruders,* 2008, ISBN 978-3-446-41372-6, 188
- **KLEMENS KOHLGRÜBER.** *Co-Rotating Twin-Screw Extruders,* 2008, ISBN 978-3-446-41372-6, 102-104